# EUROPÄISCHE PATENTSCHRIFT

(11) **EP 3 502 428 B1**
(45) Veröffentlichungstag und Bekanntmachung des Hinweises auf die Patenterteilung: **23.09.2020**
(21) Anmeldenummer: 18213810.7
(22) Anmeldetag: 19.12.2018
(51) Int. Cl.: F01N 3/035, F01N 3/023, F01N 3/025, F01N 3/30, F01N 3/10, F01N 3/20, F01N 9/00, F01N 11/00, F01N 13/00

(54) **ABGASNACHBEHANDLUNGSSYSTEM UND VERFAHREN ZUR ABGASNACHBEHANDLUNG EINES VERBRENNUNGSMOTORS**
EXHAUST GAS TREATMENT SYSTEM AND METHOD FOR TREATING THE EXHAUST GAS OF A COMBUSTION ENGINE
SYSTÈME DE POST-TRAITEMENT DES GAZ D'ÉCHAPPEMENT ET PROCÉDÉ DE POST-TRAITEMENT DES GAZ D'ÉCHAPPEMENT D'UN MOTEUR À COMBUSTION INTERNE

(30) Priorität: 21.12.2017 DE 102017130886
(43) Veröffentlichungstag der Anmeldung: 26.06.2019
(73) Patentinhaber: VOLKSWAGEN AKTIENGESELLSCHAFT, 38440 Wolfsburg (DE)
(72) Erfinder: Paukner, Stefan, 38442 Wolfsburg (DE); Baron von Ceumern-Lindenstjerna, Falk-Christian, 38124 Braunschweig (DE)
(74) Vertreter: Gulde & Partner

(56) Entgegenhaltungen:
- DE-A1-102012 011 603
- DE-A1-102012 021 573
- DE-A1-102016 206 394

## Beschreibung

Die Erfindung betrifft ein Abgasnachbehandlungssystem für einen Verbrennungsmotor sowie ein Verfahren zur Abgasnachbehandlung eines Verbrennungsmotors gemäß den Oberbegriffen der unabhängigen Patentansprüche.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem überstöchiometrischen Verbrennungsluftverhältnis sowie kalter Zylinderwände während des Kaltstarts. Die Kaltstartphase ist somit maßgeblich für die Einhaltung der gesetzlich vorgeschriebenen Partikelgrenzwerte. Im Fahrbetrieb wird ein solcher Ottopartikelfilter weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann. Aufgrund der guten Wirkungsgrade beim Ottomotor ist eine Regeneration eines Partikelfilters in Unterbodenposition in bestimmten Betriebssituationen unmöglich, sodass die Regeneration eines Partikelfilters in Unterbodenlage spezieller Fahrzyklen bedarf. Eine motornahe Positionierung des Partikelfilters ist günstig, da dadurch höhere Abgastemperaturen am Partikelfilter vorliegen und das Aufheizen auf eine Regenerationstemperatur erleichtert wird. Ein weiteres Problem bei Drei-Wege-Katalysatoren mit einer drei-Wege-katalytisch wirksamen Beschichtung, sogenannten Vier-Wege-Katalysatoren, ist die Tatsache, dass die Beschichtung starke Alterungserscheinungen aufweisen kann, sodass für die Konvertierung der gasförmigen Schadstoffe ein zusätzlicher Drei-Wege-Katalysator in motornaher Lage erforderlich sein kann.

Aus der DE 10 2008 036 127 A1 ist ein Verfahren zur Abgasnachbehandlung eines Verbrennungsmotors bekannt, in dessen Abgaskanal ein Partikelfilter und ein Drei-Wege-Katalysator angeordnet sind. Dabei ist der Partikelfilter als erste Komponente der Abgasnachbehandlung stromabwärts eines Auslasses des Verbrennungsmotors angeordnet. Stromabwärts des Partikelfilters ist ein Drei-Wege-Katalysator angeordnet. Dabei wird der Sauerstoffgehalt im Abgas zur Regeneration des Partikelfilters über eine Lambdaregelung des Drei-Wege-Katalysators erhöht.

Die DE 10 2010 046 747 A1 offenbart ein Abgasnachbehandlungssystem für einen Ottomotor sowie ein Verfahren zur Abgasnachbehandlung. Dabei ist stromabwärts eines Drei-Wege-Katalysators ein Partikelfilter angeordnet, wobei zur Regeneration der im Partikelfilter zurückgehaltenen Rußpartikel ein Sekundärluftsystem bereitgestellt werden kann, welches stromabwärts des Drei-Wege-Katalysators und stromaufwärts des Partikelfilters Frischluft in die Abgasanlage einbläst.

Aus der DE 10 2015 212 514 A1 sind ein Verfahren und eine Vorrichtung zur Abgasnachbehandlung eines Verbrennungsmotors bekannt, bei dem in Strömungsrichtung eines Abgases durch den Abgaskanal ein motornaher Drei-Wege-Katalysator und stromabwärts des Drei-Wege-Katalysator ein Partikelfilter angeordnet sind, wobei zur Regeneration des Partikelfilters Frischluft aus dem Ansaugtrakt stromabwärts eines Verdichters des Abgasturboladers abgezapft wird und dem Abgaskanal stromabwärts des Drei-Wege-Katalysators und stromaufwärts des Partikelfilters zugeführt wird.

Aus der DE 10 2016 206 394 A1 ist ein Verfahren zur Abgasnachbehandlung eines Verbrennungsmotors mit einer zweiflutigen Abgasanlage bekannt, wobei beide Abgasfluten des Verbrennungsmotor durch einen gemeinsamen Abgasbrenner beheizt werden können. Dabei sind in jeder der Abgasfluten ein motornaher Drei-Wege-Katalysator und ein Vier-Wege-Katalysator in Unterbodenlage angeordnet.

Die DE 10 2012 011 603 A1 offenbart eine Abgasanlage für einen Verbrennungsmotor, in welcher in Strömungsrichtung eines Abgasstroms ein motornaher erster Drei-Wege-Katalysator, stromabwärts des ersten Drei-Wege-Katalysators ein HC-Adsorber und weiter stromabwärts ein weiterer Drei-Wege-Katalysator angeordnet sind. Dabei ist der weitere Drei-Wege-Katalysator mittels eines Abgasbrenners beheizbar.

Die DE 10 2012 021 573 A1 offenbart ein Verfahren zum Betreiben eines Abgasbrenners in der Abgasanlage eines Verbrennungsmotors, wobei das Brennerabgas stromaufwärts zweier in Reihe geschalteter Drei-Wege-Katalysatoren in die Abgasanlage eingeleitet wird. Es ist vorgesehen, dass die dem Abgasbrenner zugeführte Kraftstoffmenge mittels einer Lambdasonde stromabwärts des ersten Drei-Wege-Katalysators geregelt wird.

Nachteilig an den bekannten Lösungen ist jedoch, dass mit den aus dem Stand der Technik bekannten Verfahren eine Regeneration eines Partikelfilters in Unterbodenlage eines Kraftfahrzeuges in Schwachlastzyklen des Verbrennungsmotors nicht möglich ist.

Aufgabe der Erfindung ist es, eine Fahrprofil unabhängige Teilregeneration eines Vier-Wege-Katalysators zu ermöglichen und Sekundäremissionen bei der Regeneration zu vermeiden.

Erfindungsgemäß wird diese Aufgabe durch ein Abgasnachbehandlungssystem für einen Verbrennungsmotor mit einer Abgasanlage gelöst, welche mit einem Auslass des Verbrennungsmotors verbunden ist. Dabei umfasst die Abgasanlage einen Abgaskanal, in dem mindestens ein Drei-Wege-Katalysator und ein Vier-Wege-Katalysator angeordnet sind. Das Abgasnachbehandlungssystem umfasst ferner eine Sekundärluftpumpe und einen Abgasbrenner, wobei unmittelbar stromaufwärts des Vier-Wege-Katalysators eine Einleitstelle vorgesehen ist, an welcher die heißen Abgase eines Abgasbrenners des Abgasnachbehandlungssystems in die Abgasanlage einleitbar sind. Unter einer Anordnung der Einleitstelle unmittelbar stromaufwärts des Vier-Wege-Katalysators ist in diesem Zusammenhang zu verstehen, dass zwischen der Einleitstelle und dem Vier-Wege-Katalysator keine weitere katalytisch wirksame Komponente zur Abgasnachbehandlung angeordnet ist. Es ist jedoch möglich, dass zwischen der Einleitstelle und dem Vier-Wege-Katalysator eine Mischstrecke ausgebildet ist, in welcher sich das heiße Abgas des Abgasbrenners mit dem Abgas des Verbrennungsmotors vor Eintritt in den Vier-Wege-Katalysator mischen kann. Durch den Abgasbrenner kann eine hohe Energiemenge in die Abgasanlage eingebracht werden, wodurch der Vier-Wege-Katalysator zeitnah nach einer Regenerationsanforderung auf seine Regenerationstemperatur aufgeheizt werden kann. Ferner wird der Abgasbrenner bei einem Kaltstart zum Heizen der Vier-Wege-Katalysatoren genutzt werden, damit der Vier-Wege-Katalysator zeitnah nach einem Kaltstart seine Light-Off-Temperatur erreicht und somit eine effiziente Konvertierung von Schadstoffen ermöglicht. Der Verbrennungsmotor ist vorzugsweise als mittels Zündkerzen fremdgezündeter Verbrennungsmotor nach dem Ottoprinzip ausführt.

Durch die in den abhängigen Ansprüchen aufgeführten Merkmale sind vorteilhafte Verbesserungen und Weiterbildungen des erfindungsgemäßen Abgasnachbehandlungssystems für einen Verbrennungsmotor möglich.

Erfindungsgemäß ist vorgesehen, dass in der Abgasanlage ein erster motornaher Drei-Wege-Katalysator und stromabwärts des motornahen Drei-Wege-Katalysators ein Vier-Wege-Katalysator angeordnet sind, wobei die Einleitstelle stromabwärts des motornahen Drei-Wege-Katalysators und stromaufwärts des Vier-Wege-Katalysators ausgebildet ist. Unter einer motornahen Anordnung des Drei-Wege-Katalysators ist in diesem Zusammenhang eine Anordnung der Abgasnachbehandlungskomponenten mit einer Abgaslauflänge von weniger als 80 cm, insbesondere von weniger als 50 cm, besonders bevorzugt von weniger als 35 cm ab einem Auslass des Verbrennungsmotors zu verstehen. Dadurch ist eine beschleunigte Aufheizung des Drei-Wege-Katalysators, insbesondere nach einem Kaltstart des Verbrennungsmotors, möglich. Durch die motornahe Position des Drei-Wege-Katalysators geht weniger Abwärme über die Wände des Abgaskanals verloren, sodass der Drei-Wege-Katalysator vergleichsweise früh nach einem Kaltstart des Verbrennungsmotors seine Light-Off-Temperatur erreicht. Da insbesondere bei Partikelfiltern oder Vier-Wege-Katalysatoren in Unterbodenposition die zur Oxidation des Rußes benötigten Regenerationstemperaturen in niederlastigen Fahrzyklen nicht erreicht werden, ist es bei diesen Anordnungen besonders vorteilhaft, einen Abgasbrenner stromaufwärts des Vier-Wege-Katalysators oder des Partikelfilters anzuordnen, um unabhängig vom Abgas des Verbrennungsmotors eine Heizmöglichkeit zu schaffen. Ferner kann durch die Temperaturregulierung über den Abgasbrenner ein effektiver Bauteilschutz realisiert werden, da aufgrund der im Allgemeinen niedrigeren Temperaturen in der Unterbodenlage die Gefahr eines unkontrollierten Rußabbrands auf dem Vier-Wege-Katalysator oder dem Partikelfilter vermieden wird. Somit kann die Gefahr einer thermischen Beschädigung des Vier-Wege-Katalysators oder des Partikelfilters wirksam verringert werden.

Erfindungsgemäß ist vorgesehen, dass stromabwärts des Vier-Wege-Katalysators ein weiterer Drei-Wege-Katalysator angeordnet ist. Durch den Drei-Wege-Katalysator können Sekundäremissionen bei der Oxidation des Rußes auf dem Vier-Wege-Katalysator oder Emissionen aufgrund von Regelabweichungen in der Lambdaregelung eliminiert werden, wodurch eine weitere Verringerung der Emissionen möglich ist.

Gemäß einer bevorzugten Ausführungsform der Erfindung ist vorgesehen, dass stromaufwärts des motornahen Drei-Wege-Katalysators eine erste Lambdasonde und unmittelbar stromaufwärts des Vier-Wege-Katalysators eine zweite Lambdasonde im Abgaskanal angeordnet sind. Dadurch kann mit einem Lambdasondenpaar sowohl die Lambdaregelung des Verbrennungsmotors als auch die Regelung des Abgasbrenners erfolgen. Dabei ist eine kurze Gaslaufzeit von Austritt des Abgasbrenners bis zur zweiten Lambdasonde vorteilhaft, wodurch eine besonders schnelle Regelung des Verbrennungsluftverhältnisses des Abgasbrenners möglich ist. Dabei ist die erste Lambdasonde vorzugsweise als Breitbandlambdasonde ausgeführt, um eine quantitative Aussage über den Sauerstoffgehalt im Abgas zu ermöglichen. Die zweite Lambdasonde kann als Sprung-Lambdasonde ausgeführt werden, um die Kosten zu reduzieren und somit eine qualitative Aussage über einen Sauerstoffüberschuss im Abgas zu liefern. Alternativ kann die zweite Lambdasonde auch als Breitbandsonde ausgeführt werden, um eine quantitative Regelung des Verbrennungsluftverhältnisses des Abgasbrenners zu ermöglichen.

Alternativ ist mit Vorteil vorgesehen, dass stromaufwärts des motornahen ersten Drei-Wege-Katalysators eine erste Lambdasonde und stromabwärts des Vier-Wege-Katalysators eine zweite Lambdasonde angeordnet ist. Diese Variante hat den Vorteil, dass es zu einer besseren Gasdurchmischung von Brennergas und Abgas des Verbrennungsmotors kommt und eine Bewertung der Endrohr-Emissionen des Verbrennungsmotors möglich ist.

Besonders bevorzugt ist eine Ausführungsvariante, bei der stromaufwärts des motornahen Drei-Wege-Katalysators eine erste Lambdasonde, unmittelbar stromaufwärts des Vier-Wege-Katalysators eine zweite Lambdasonde und stromabwärts des Vier-Wege-Katalysators eine dritte Lambdasonde angeordnet sind. Diese Ausführungsform vereint die Vorteile der beiden vorher genannten Ausführungsformen bei geringfügig erhöhten Kosten und erhöhter Komplexität des Abgasnachbehandlungssystems.

Erfindungsgemäß ist vorgesehen, dass zwischen der Einleitstelle und dem Vier-Wege-Katalysator eine Mischstrecke mit einer Länge von mindestens 30 cm, vorzugsweise von mindestens 50 cm ausgebildet ist. Dadurch wird eine bessere Durchmischung der Abgase des Abgasbrenners und des Verbrennungsmotors vor Eintritt in den Vier-Wege-Katalysator möglich, wodurch eine verbesserte Lambdaregelung für die Abgasnachbehandlung möglich ist. Dadurch können die Emissionen weiter gesenkt werden.

In einer bevorzugten Ausgestaltung des Abgasnachbehandlungssystems ist vorgesehen, dass die Sekundärluftpumpe über eine Luftleitung mit dem Abgasbrenner verbunden ist. Somit kann das Verbrennungsluftverhältnis das Abgasbrenners eingeregelt werden und eine entsprechend saubere und emissionsarme Verbrennung am Abgasbrenner sichergestellt werden. Zudem kann die Sekundärluftpumpe in den Regenerationsphasen des Vier-Wege-Katalysators oder des Partikelfilters, in denen die Brenngaszufuhr zum Abgasbrenner deaktiviert ist, den zur Oxidation des im Vier-Wege-Katalysator oder im Partikelfilter zurückgehaltenen Rußes notwendigen Sauerstoff an der Einleitstelle in den Abgaskanal einbringen. Dies hat den Vorteil, dass am Abgaskanal nur eine Einleitstelle vorzusehen ist. Alternativ kann die Sekundärluftpumpe auch über eine zweite Luftleitung direkt mit dem Abgaskanal stromaufwärts des Vier-Wege-Katalysators verbunden sein.

Gemäß einer bevorzugten und vorteilhaften Ausführungsform der Erfindung ist vorgesehen, dass der Abgasbrenner mit einem variablen Verbrennungsluftverhältnis betreibbar ist. Dadurch kann der Abgasbrenner Lambdaschwankungen, insbesondere einen unterstöchiometrischen Lambdabetrieb in der Kaltstartphase des Verbrennungsmotors ausgleichen und somit für ein stöchiometrisches Abgas stromabwärts der Einleitstelle für die heißen Brennergase des Abgasbrenners sorgen.

Besonders bevorzugt ist dabei, wenn stromabwärts einer Einleitstelle des Abgasbrenners ein stöchiometrisches Abgas eingeregelt wird. Durch ein stöchiometrisches Abgas ist eine besonders effiziente Abgasnachbehandlung an einem stromabwärts der Einleitstelle liegenden Drei-Wege-Katalysator oder Vier-Wege-Katalysator möglich.

Erfindungsgemäß wird ein Verfahren zur Abgasnachbehandlung eines Verbrennungsmotors, insbesondere eines mittels Zündkerzen fremdgezündeten Verbrennungsmotors nach dem Ottoprinzip, mit einem erfindungsgemäßen Abgasnachbehandlungssystem vorgeschlagen, welches folgende Schritte umfasst:
- Aufheizen des Vier-Wege-Katalysators durch Einleiten heißer Brennergase des Abgasbrenners auf eine Regenerationstemperatur, wobei stromabwärts des Vier-Wege-Katalysators oder stromabwärts des zweiten Drei-Wege-Katalysators ein stöchiometrisches Abgas eingeregelt wird,
- Abschalten des Abgasbrenners und Einblasen von Sekundärluft stromaufwärts des Vier-Wege-Katalysators, wobei der im Vier-Wege-Katalysator zurückgehaltene Ruß durch ein überstöchiometrisches Abgas oxidiert wird,
- Betreiben des Verbrennungsmotors mit einem unterstöchiometrischen Verbrennungsluftverhältnis, wobei der im Sauerstoffspeicher des Vier-Wege-Katalysators während der Phase der Sekundärlufteinblasung eingespeicherte Sauerstoff zumindest im Wesentlichen ausgeräumt wird.

Unter einer zumindest im Wesentlichen Ausräumung des Sauerstoffspeichers ist eine maximale Sauerstoffmenge von maximal 25 % der Speicherkapazität, insbesondere von maximal 15 %, besonders bevorzugt von maximal 10 % zu verstehen.

Durch ein erfindungsgemäßes Verfahren ist eine Regeneration des Vier-Wege-Katalysators, insbesondere bei einer Anordnung in einer Unterbodenlage eines Kraftfahrzeuges, im Wesentlichen unabhängig vom Lastzustand des Verbrennungsmotors und unabhängig vom Beladungszustand des Vier-Wege-Katalysators möglich. Dabei wird bei jedem Kaltstart, bei dem der Vier-Wege-Katalysator mittels des Abgasbrenners aufgeheizt wird, im Anschluss an eine solche Heizphase eine Teilregeneration des Vier-Wege-Katalysators durchgeführt. Somit kann der Vier-Wege-Katalysator auch bei typischem Schwachlastverkehr, wie beispielsweise im Stadtverkehr oder im Kurzstreckenbetrieb teilregeneriert werden, wenn eine Regeneration allein durch innermotorische Maßnahmen unmöglich ist. Zudem können die Emissionen des Verbrennungsmotors auch während der Regeneration des Partikelfilters oder des Vier-Wege-Katalysators effektiv gemindert werden, da eine Abgasreinigung durch den Drei-Wege-Katalysator erfolgt und während der Sekundärlufteinblasung der Brenner abgeschaltet ist, sodass Sekundäremissionen bei der Regeneration des Vier-Wege-Katalysators minimiert werden. Durch den sich an die Regenerationsphase anschließenden unterstöchiometrischen Betrieb des Verbrennungsmotors wird sichergestellt, dass es nicht zu einem Magerdurchbruch durch den Vier-Wege-Katalysator kommt und somit die zu reduzierenden Abgaskomponenten, insbesondere Stickoxide, nicht mehr konvertiert werden können. Bevorzugt ist dabei, wenn der Verbrennungsmotor in der Phase des unterstöchiometrischen Betriebs mit einem Verbrennungsluftverhältnis von 0,9 < λ < 0,98 betrieben wird, um einerseits hinreichend viel unverbrannte Kohlenwasserstoffe zur Ausräumung des Sauerstoffspeichers zu liefern und andererseits einen Anstieg an Sekundäremissionen zu vermeiden.

In einer bevorzugten Ausführungsform des Verfahrens zur Abgasnachbehandlung ist vorgesehen, dass das Mischlambda aus dem Abgasluftverhältnis des Verbrennungsmotors und der eingeblasenen Sekundärluft in der Regenerationsphase zwischen 1,05 und 1,2 liegt. Dadurch wird zum einen eine thermische Schädigung des Vier-Wege-Katalysators durch einen unkontrollierten Rußabbrand vermieden, zum anderen führt die Sekundärlufteinblasung nicht zu einer zu starken Abkühlung des Vier-Wege-Katalysators, sodass die Regeneration nicht zu früh abbricht.

In einer bevorzugten Ausführungsform des Verfahrens ist vorgesehen, dass nach jeder aktiven Heizphase des Vier-Wege-Katalysators, in welcher der Vier-Wege-Katalysator durch den Abgasbrenner aufgeheizt wird, eine Regenerationsphase des Vier-Wege-Katalysators eingeleitet wird. Dadurch können gegebenenfalls die Drucksensoren zur Differenzdruckmessung über den Vier-Wege-Katalysator entfallen, da keine Regeneration in Abhängigkeit eines Beladungsmodells oder einer Differenzdruckmessung notwendig ist, wenn in jeder aktiven Heizphase eine Teilregeneration des Vier-Wege-Katalysators stattfindet.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit gleichen Bezugszeichen gekennzeichnet. Es zeigen:
- Figur 1: ein Beispiel eines Verbrennungsmotors mit einem Abgasbehandlungssystem welches nicht Teil der vorliegenden Erfindung ist;
- Figur 2: ein Ausführungsbeispiel eines Verbrennungsmotors mit einem erfindungsgemäßen Abgasnachbehandlungssystem, wobei das Abgasnachbehandlungssystem zusätzlich ein weiteren Drei-Wege-Katalysator stromabwärts des Vier-Wege-Katalysators in Unterbodenlage aufweist;
- Figur 3: ein Beispiel eines Verbrennungsmotors mit einem Abgasnachbehandlungssystem welches nicht Teil der vorliegenden Erfindung ist, mit einem motornahen Vier-Wege-Katalysator und einem dem Vier-Wege-Katalysator nachgeschalteten Drei-Wege-Katalysator; und
- Figur 4: ein Diagramm, in welchem der Temperaturverlauf und das Abgasluftverhältnis in der Abgasanlage bei der Durchführung eines erfindungsgemäßen Verfahrens zur Abgasnachbehandlung dargestellt sind.

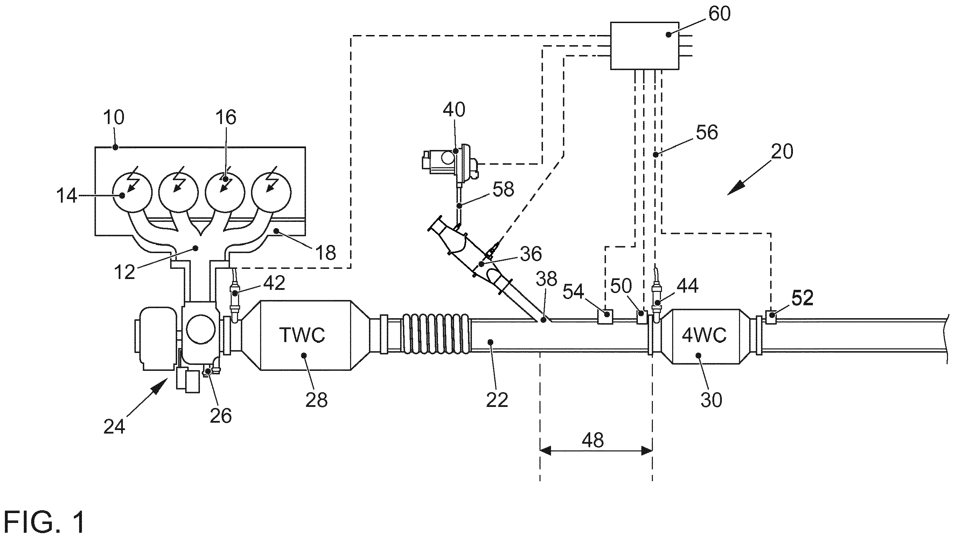

Figur 1 zeigt eine schematische Darstellung eines Verbrennungsmotors 10, dessen Auslass 12 mit einer Abgasanlage 20 verbunden ist. Der Verbrennungsmotor 10 ist als Ottomotor ausgeführt, welcher mittels Zündkerzen 16 fremdgezündet wird und weist mehrere Brennräume 14 auf. Der Verbrennungsmotor 10 ist vorzugsweise als mittels eines Abgasturboladers 24 aufgeladener Verbrennungsmotor 10 ausgeführt, wobei eine Turbine 26 des Abgasturboladers 24 stromabwärts des Auslasses 12 und stromaufwärts der ersten emissionsmindernden Abgasnachbehandlungskomponente, insbesondere stromaufwärts eines motornahen Drei-Wege-Katalysators 28 angeordnet ist. Die Abgasanlage 20 umfasst einen Abgaskanal 22, in dem in Strömungsrichtung eines Abgases durch den Abgaskanal 22 ein motornaher Drei-Wege-Katalysator 28 und stromabwärts des motornahen Drei-Wege-Katalysators 28 ein Vier-Wege-Katalysator 30 angeordnet sind. Der motornahe Drei-Wege-Katalysator 28 ist mit einem Abstand von weniger als 80 cm Abgaslauflänge, insbesondere von weniger als 50 cm Abgaslauflänge, ab dem Auslass 12 des Verbrennungsmotors 10 angeordnet. Der Vier-Wege-Katalysator 30 ist vorzugsweise in Unterbodenlage eines Kraftfahrzeuges und somit in einer motorfernen Position, das heißt mit einem Abstand von mehr 100 cm Abgaslauflänge ab dem Auslass 12 des Verbrennungsmotors 10, angeordnet. Stromabwärts des motornahen ersten Drei-Wege-Katalysators 28 und stromaufwärts des Vier-Wege-Katalysators 30 ist eine Einleitstelle 38 für heiße Abgase eines Abgasbrenners 36 vorgesehen, über welche der stromabwärts der Einleitstelle 38 angeordnete Vier-Wege-Katalysator 30 unabhängig von der Betriebssituation des Verbrennungsmotors 10 aufgeheizt werden kann. Die Einleitstelle 38 ist von dem Vier-Wege-Katalysator 30 beabstandet, sodass sich zwischen der Einleitstelle 38 und dem Einlass des Vier-Wege-Katalysators 30 eine Mischstrecke 48 ergibt, in der sich das heiße Brennergas mit dem Abgas des Verbrennungsmotors 10 vermischt.

In der Abgasanlage 20 können zusätzlich weitere Katalysatoren, insbesondere ein weiterer Drei-Wege-Katalysator 34, ein NOx-Speicherkatalysator oder ein Katalysator zur selektiven katalytischen Reduktion von Stickoxiden angeordnet sein. Stromaufwärts des ersten Drei-Wege-Katalysators 28 ist im Abgaskanal 22 eine erste Lambdasonde 42 angeordnet, mit welcher der Sauerstoffgehalt λ₁ des Abgases stromabwärts des Auslasses 12 und stromaufwärts der ersten Abgasnachbehandlungskomponente, also des motornahen ersten Drei-Wege-Katalysators 28, ermittelt werden kann. Stromabwärts der Einleitstelle 38 und stromaufwärts des Vier-Wege-Katalysators 30 ist im Abgaskanal 22 eine zweite Lambdasonde 44 angeordnet, mit welcher der Sauerstoffgehalt λ₂ im Abgaskanal 28 unmittelbar stromaufwärts des Vier-Wege-Katalysators 30 ermittelt werden kann. Die erste Lambdasonde 42 ist vorzugsweise als Breitband-Lambdasonde aufgeführt und über eine erste Signalleitung 56 mit einem Steuergerät 60 des Verbrennungsmotors 10 verbunden. Die zweite Lambdasonde 44 ist vorzugsweise als Sprungsonde ausgeführt und über eine zweite Signalleitung 56 mit dem Steuergerät 60 verbunden. Die erste Lambdasonde 42 und die zweite Lambdasonde 44 bilden dabei eine Sensoranordnung aus, mit welcher das Verbrennungsluftverhältnis λ des Verbrennungsmotors 10 und des Abgasbrenners 36 geregelt werden können. Zusätzlich kann über die Sensoranordnung eine On-Board-Diagnose des ersten Drei-Wege-Katalysators 28 erfolgen.

Eine Sekundärluftpumpe 40 ist über eine Sekundärluftleitung 58 mit dem Abgasbrenner 36 verbunden. In der Sekundärluftleitung 44 kann ein Sekundärluftventil angeordnet sein, mit welchem die Luftzufuhr zu dem Abgasbrenner 36 hergestellt und unterbunden werden kann. Ferner sind stromaufwärts und stromabwärts des Vier-Wege-Katalysators 30 Drucksensoren 50, 52 vorgesehen, mit welchen eine Differenzdruckmessung über den Vier-Wege-Katalysator 30 zur Ermittlung des Beladungszustands des Vier-Wege-Katalysators 30 durchgeführt werden kann. Zudem kann über die Drucksensoren 50, 52 eine On-Board-Diagnose des Vier-Wege-Katalysators 30 erfolgen. Die Sekundärluftpumpe 40 kann zusätzlich über eine weitere Sekundärluftleitung mit einer weiteren Einleitstelle am Abgaskanal 22 verbunden sein, sodass die Sekundärluft unabhängig von dem Abgasbrenner 36 in den Abgaskanal 22 eingeleitet werden kann. Ferner können in der Abgasanlage 20 noch weitere Sensoren, insbesondere ein Temperatursensor 54 oder ein NOx-Sensor angeordnet sein, um die Verbrennung des Verbrennungsmotors 10 und/oder des Abgasbrenners 36 zu steuern.

In einer Variante des Abgasnachbehandlungssystems ist die zweite Lambdasonde 44 stromabwärts des Vier-Wege-Katalysators 30 angeordnet, wodurch das Abgasluftverhältnis stromabwärts des Vier-Wege-Katalysators 30 ermittelt werden kann. Der Vorteil dieser Variante liegt darin, dass eine bessere Gasdurchmischung von dem Brennergas und dem Abgas des Verbrennungsmotors 10 erfolgt und eine Bewertung des Endrohr-Lambda-Wertes möglich ist. Nachteilig an dieser Variante ist jedoch, dass das Signal durch die Sauerstoffspeicherfähigkeit des Vier-Wege-Katalysators 30 eine erhöhte Trägheit aufweist, wobei jede Regelabweichung der Lambdaregelung unmittelbar zu einer Erhöhung der Endrohremissionen führt.

In einer weiteren Variante das Abgasnachbehandlungssystem sind eine zweite Lambdasonde 44 unmittelbar stromaufwärts des Vier-Wege-Katalysators 30 und eine dritte Lambdasonde 46 stromabwärts des Vier-Wege-Katalysators 30 vorgesehen. Diese Variante hat den Vorteil, dass sich die Vorteile der beiden vorher genannten Varianten miteinander kombinieren lassen. Nachteilig ist jedoch, dass sich durch eine zusätzliche Lambdasonde die Komplexität der Regelung und die Kosten erhöhen.

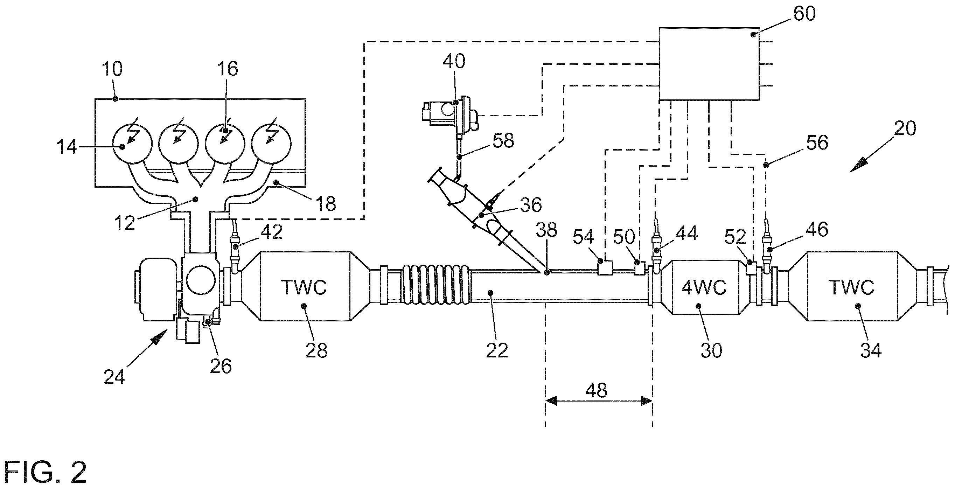

In Figur 2 ist ein Ausführungsbeispiel eines Verbrennungsmotors 10 mit einem erfindungsgemäßen Abgasnachbehandlungssystem dargestellt. Bei im Wesentlichen gleichem Aufbau wie zu Figur 1 ausgeführt, ist im Abgaskanal 22 stromabwärts des Vier-Wege-Katalysators 30 ein weiterer Drei-Wege-Katalysator 34 angeordnet. Dadurch kann das Ziel eines stöchiometrischen Endrohrabgases während des Betriebs des Abgasbrenners 36 leichter erreicht werden, da ein weiteres Bauteil mit einem Sauerstoffspeicher vorhanden ist. Somit können Lambdadurchbrüche durch den Vier-Wege-Katalysator 30 durch die Sauerstoffspeicherfähigkeit des stromabwärts des Vier-Wege-Katalysators 30 angeordneten Drei-Wege-Katalysators 34 ausgeglichen werden. Dies führt zu einer weiteren Verbesserung der Endrohremissionen.

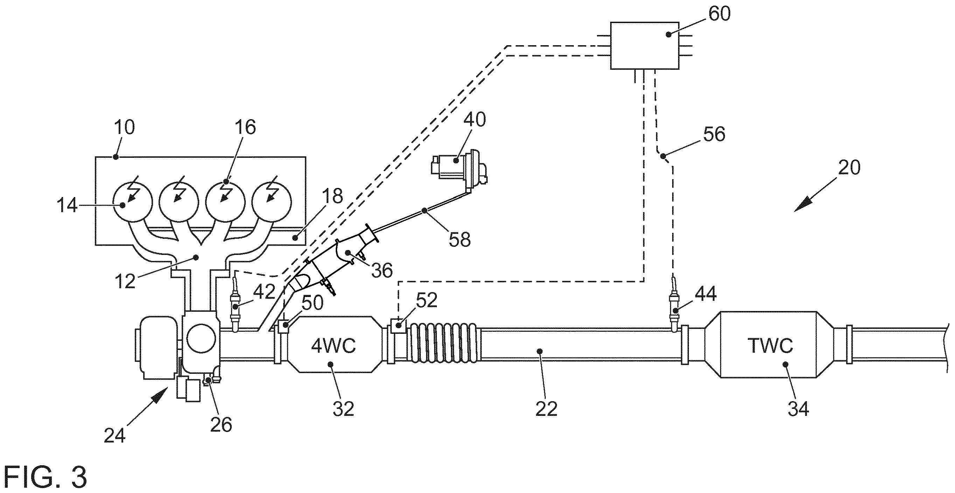

In Figur 3 ist ein weiteres Beispiel des Verbrennungsmotors 10 dargestellt. Bei im Wesentlichen gleichem Aufbau wie zu Figur 1 und Figur 2 ausgeführt, sind anstelle eines motornahen Drei-Wege-Katalysators 28 und eines Vier-Wege-Katalysators 30 in Unterbodenlage ein motornaher Vier-Wege-Katalysators 32 und ein diesem motornahen Vier-Wege-Katalysator 32 nachgeschalteter Drei-Wege-Katalysator 34 in Unterbodenlage eines Kraftfahrzeuges angeordnet. Dieses Beispiel hat den Vorteil, dass ein schneller Light-Off auf dem Vier-Wege-Katalysator 32 erreicht wird. Die Magerphase mit überstöchiometrischem Abgas durch Sekundärlufteinblasung darf dann aber nur so lange gefahren werden, bis der Sauerstoffspeicher (OSC) auf dem Drei-Wege-Katalysator 34 ausreicht, um den Sauerstoffüberschuss aufzunehmen, um einen Magerdurchbruch durch den Drei-Wege-Katalysator 34 zu vermeiden. Somit kann ein Anstieg von zu reduzierenden Abgaskomponenten, insbesondere von Stickoxidemissionen, vermieden werden. Nachteilig an einer solchen Lösung ist jedoch, dass die Dauer der Magerphase durch die Sauerstoffspeicherfähigkeit des Drei-Wege-Katalysators 34 begrenzt ist. Zudem ist die Dauerhaltbarkeit des motornahen Vier-Wege-Katalysators 32 begrenzt.

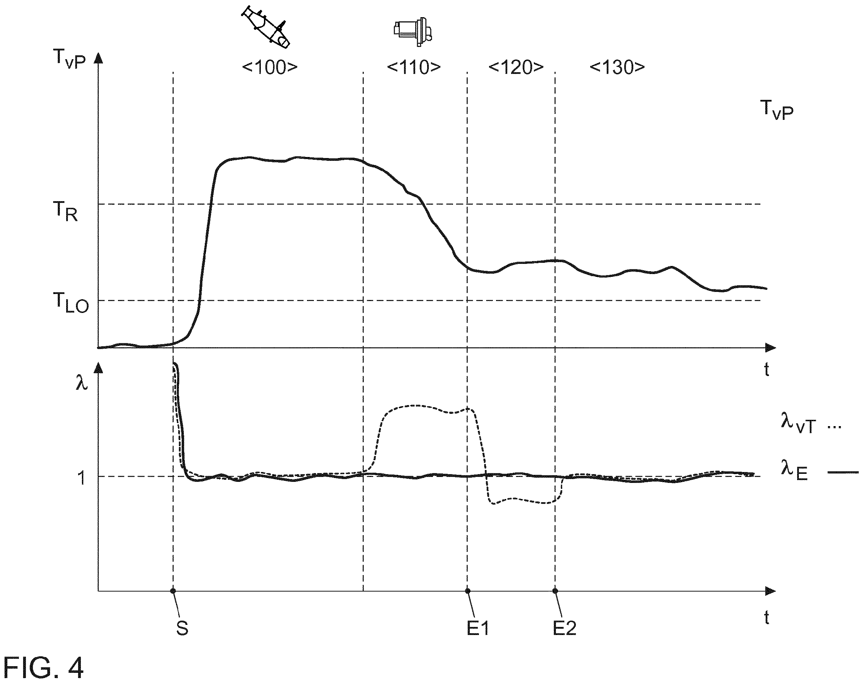

In Figur 4 ist der Temperaturverlauf vor dem Vier-Wege-Katalysator 30 während eines erfindungsgemäßen Verfahrens zur Abgasnachbehandlung dargestellt. Ferner zeigt Figur 4 das Abgasluftverhältnis λ stromaufwärts des motornahen Drei-Wege-Katalysators 28 (λ_{vT}) und stromabwärts des letzten katalytisch wirksamen Bauteils 30, 34 des Abgasnachbehandlungssystems (λ_{E}). Dabei wird der Verbrennungsmotor 10 in einem ersten Verfahrensschritt <100> ab dem Motorstart S durch die Abwärme des Verbrennungsmotors 10 und parallel durch den Abgasbrenner 36 beheizt. Der Verbrennungsmotor 10 wird in diesem Verfahrensschritt <100> mit einem stöchiometrischen Verbrennungsluftverhältnis (λ = 1) betrieben und auf ein stöchiometrisches Abgasluftverhältnis λ_{E} stromabwärts der letzten katalytisch wirksamen Abgasnachbehandlungskomponente 30, 34 eingeregelt. Die Heizphase wird solange aufrechterhalten, bis der Vier-Wege-Katalysator 30 eine Temperatur oberhalb der Regenerationstemperatur T_{R} zur Oxidation des im Vier-Wege-Katalysator 30 zurückgehaltenen Rußes erreicht hat. In einem Verfahrensschritt <110> wird der Abgasbrenner 36 abgeschaltet und Sekundärluft in den Abgaskanal 22 stromaufwärts des Vier-Wege-Katalysators 30 eingeblasen. Dabei ist die Sekundärluftmenge so zu bemessen, dass das Mischlambda bei stöchiometrischem Motorbetrieb und Sekundärlufteinblasung im Bereich von 1,05 < λ_{vT} < 1,2 liegt. Dadurch wird eine thermische Schädigung des Vier-Wege-Katalysators 30 durch unkontrollierten Rußabbrand sowie eine zu starke Auskühlung des Vier-Wege-Katalysators 30 vermieden. Die Sekundärlufteinblasung wird so lang aufrechterhalten, bis die Temperatur des Vier-Wege-Katalysators 30 unter die Regenerationstemperatur T_{R} fällt und eine Teilregeneration des Vier-Wege-Katalysators 30 durchgeführt wurde. Am Ende E1 des Verfahrensschritts <110> wird die Sekundärlufteinblasung abgeschaltet. Da zu diesem Zeitpunkt der Sauerstoffspeicher (OSC) des Vier-Wege-Katalysator vollständig gefüllt ist, wird anschließend an die Sekundärlufteinblasung in einem Verfahrensschritt <120> der Verbrennungsmotors 10 mit einem unterstöchiometrischen, fetten Verbrennungsluftverhältnis λ < 1 betrieben, um den Sauerstoffspeicher (OSC) zumindest teilweise auszuräumen. Dieser Verfahrensschritt <120> wird zu einem Zeitpunkt E2 abgebrochen, bevor es zu einem Fettdurchbruch durch den Vier-Wege-Katalysator 30 kommt. Die Steuerung erfolgt vorzugsweise modellbasiert, sodass eine geringe Restbeladung von mindestens 5 % des Sauerstoffspeichers (OSC) verbleibt und ein Fettdurchbruch vermieden wird. Anschließend wird der Verbrennungsmotor 10 in einem Verfahrensschritt <130> mit einem stöchiometrischen Verbrennungsluftverhältnis λ = 1 betrieben, wobei eine Konvertierung der im Abgas vorhandenen Schadstoffe durch die Katalysatoren 28, 30, 32, 34 erfolgt. Das erfindungsgemäße Verfahren wird vorzugsweise ohne eine Bewertung der Rußbeladung des Vier-Wege-Katalysators 30 nach jeder Heizphase des Abgasbrenners 36 durchgeführt.

Zusammenfassend lässt sich festhalten, dass durch ein erfindungsgemäßes Abgasnachbehandlungssystem und das beschriebene erfindungsgemäße Verfahren unabhängig von Fahrzyklen und unabhängig von der Beladung des Vier-Wege-Katalysators 30 eine Teilregeneration des Vier-Wege-Katalysators 30 durchgeführt werden kann. Dabei erfolgt die Regeneration des Vier-Wege-Katalysators 30 emissionsneutral und führt zu keinem Anstieg der Sekundäremissionen.

### Bezugszeichenliste

- 10: Verbrennungsmotor
- 12: Auslass
- 14: Brennraum
- 16: Zündkerze
- 18: Zylinderkopf

- 20: Abgasanlage
- 22: Abgaskanal
- 24: Abgasturbolader
- 26: Turbine
- 28: motornaher Drei-Wege-Katalysator

- 30: Vier-Wege-Katalysator
- 32: motornaher Vier-Wege-Katalysator
- 34: zweiter Drei-Wege-Katalysator
- 36: Abgasbrenner
- 38: Einleitstelle

- 40: Sekundärluftpumpe
- 42: erste Lambdasonde
- 44: zweite Lambdasonde
- 46: dritte Lambdasonde
- 48: Mischstrecke

- 50: erster Drucksensor
- 52: zweiter Drucksensor
- 54: Temperatursensor
- 56: Signalleitung
- 58: Luftleitung

- 60: Steuergerät
- <100>: Startphase des Verbrennungsmotors mit aktivem Abgasbrenner
- <110>: Regenerationsphase des Vier-Wege-Katalysators
- <120>: Ausräumen des Sauerstoffspeichers des Vier-Wege-Katalysators
- <130>: stöchiometrischer Normalbetrieb des Verbrennungsmotors

- E1: Ende der Sekundärlufteinblasung
- E2: Ende der motorischen Fettverstellung
- S: Start des Verbrennungsmotors
- T_{vP}: Temperatur vor dem Vier-Wege-Katalysator
- T_{R}: Regenerationstemperatur des Vier-Wege-Katalysators
- T_{LO}: Light-Off-Temperatur des Vier-Wege-Katalysators
- λ_{vT}: Abgasluftverhältnis stromaufwärts des motornahen Katalysators
- λ_{E}: Abgasluftverhältnis stromabwärts der letzten katalytisch wirksamen Abgasnachbehandlungskomponente

## Patentansprüche

1. Abgasnachbehandlungssystem für einen Verbrennungsmotor (10), mit einer Abgasanlage (20), welche mit einem Auslass (12) des Verbrennungsmotors (10) verbindbar ist, wobei die Abgasanlage (20) einen Abgaskanal (22) umfasst, in dem mindestens ein Drei-Wege-Katalysator (28, 34) und ein Vier-Wege-Katalysator (30, 32) angeordnet sind, wobei unmittelbar stromaufwärts des Vier-Wege-Katalysators (30, 32) eine Einleitstelle (38) vorgesehen ist, an welcher die heißen Abgase eines Abgasbrenners (36) des Abgasnachbehandlungssystems zur Erwärmung des Vier-Wege-Katalysators (30, 32) in die Abgasanlage (20) einleitbar sind, wobei ein erster motornaher Drei-Wege-Katalysator (28) und stromabwärts des motornahen Drei-Wege-Katalysators (28) ein Vier-Wege-Katalysator (30) vorgesehen sind, wobei die Einleitstelle (38) stromabwärts des motornahen Drei-Wege-Katalysators (28) und stromaufwärts des Vier-Wege-Katalysator (30) ausgebildet ist, **dadurch gekennzeichnet, dass** in der Abgasanlage (20) stromabwärts des Vier-Wege-Katalysators (30) ein weiterer Drei-Wege-Katalysator (34) angeordnet ist, und wobei zwischen der Einleitstelle (38) und dem Vier-Wege-Katalysator (30, 32) eine Mischstrecke mit einer Länge von mindestens 30 cm ausgebildet ist.

2. Abgasnachbehandlungssystem nach Anspruch 1, **dadurch gekennzeichnet, dass** stromaufwärts des motornahen Drei-Wege-Katalysators (28) eine erste Lambdasonde (42) und unmittelbar stromaufwärts des Vier-Wege-Katalysators (30) eine zweite Lambdasonde (44) angeordnet sind.

3. Abgasnachbehandlungssystem nach Anspruch 1, **dadurch gekennzeichnet, dass** stromaufwärts des motornahen Drei-Wege-Katalysators (28) eine erste Lambdasonde (42) und stromabwärts des Vier-Wege-Katalysators (30) eine zweite Lambdasonde (44) angeordnet sind.

4. Abgasnachbehandlungssystem nach Anspruch 1, **dadurch gekennzeichnet, dass** stromaufwärts des motornahen Drei-Wege-Katalysators (28) eine erste Lambdasonde (42), unmittelbar stromaufwärts des Vier-Wege-Katalysators (30) eine zweite Lambdasonde (44) und stromabwärts des Vier-Wege-Katalysators (30) eine dritte Lambdasonde (46) angeordnet sind.

5. Verfahren zur Abgasnachbehandlung eines Verbrennungsmotors (10) mit einem Abgasnachbehandlungssystem nach einem der Ansprüche 1 bis 4, umfassend folgende Schritte:
- Aufheizen des Vier-Wege-Katalysators (30) durch Einleiten heißer Brennergase des Abgasbrenners (36) auf eine Regenerationstemperatur (T_{R}), wobei stromabwärts des Vier-Wege-Katalysators (30) oder stromabwärts des zweiten Drei-Wege-Katalysators (34) ein stöchiometrisches Abgas eingeregelt wird,
- Abschalten des Abgasbrenners (36) und Einblasen von Sekundärluft stromaufwärts des Vier-Wege-Katalysators (30), wobei der im Vier-Wege-Katalysator (30) zurückgehaltene Ruß durch ein überstöchiometrisches Abgas (λ > 1) oxidiert wird,
- Betreiben des Verbrennungsmotors (10) mit einem unterstöchiometrischen Verbrennungsluftverhältnis (λ < 1), wobei der im Sauerstoffspeicher (OSC) des Vier-Wege-Katalysators (30) während der Phase der Sekundärlufteinblasung eingespeicherte Sauerstoff zumindest im Wesentlichen ausgeräumt wird.

6. Verfahren zur Abgasnachbehandlung nach Anspruch 5, **dadurch gekennzeichnet, dass** das Mischlambda λ_{vT} aus Abgasluftverhältnis und Sekundärluft in der Regenerationsphase bei 1,05 < λ_{vT} <1,2 liegt.

7. Verfahren zur Abgasnachbehandlung nach Anspruch 5 oder 6, **dadurch gekennzeichnet, dass** nach jeder aktiven Heizphase des Abgasbrenners (36) eine Regenerationsphase des Vier-Wege-Katalysators (30, 32) eingeleitet wird.

## Claims

1. Exhaust gas aftertreatment system for an internal combustion engine (10), comprising an exhaust system (20) capable of being connected to an outlet (12) of the internal combustion engine (10), wherein the exhaust system (20) comprises an exhaust gas duct (22) in which at least one three-way catalytic converter (28, 34) and a four-way catalytic converter (30, 32) are arranged, wherein an inlet point (38) is provided immediately upstream of the four-way catalytic converter (30, 32), at which point the hot exhaust gases of an exhaust-gas burner (36) of the exhaust gas aftertreatment system can be introduced into the exhaust system (20) in order to heat the four-way catalytic converter (30, 32), wherein a first three-way catalytic converter (28) is provided near the engine and a four-way catalytic converter (30) is provided downstream of the three-way catalytic converter (28) near the engine, wherein the inlet point (38) is formed downstream of the three-way catalytic converter (28) near the engine and upstream of the four-way catalytic converter (30), **characterized in that** a further three-way catalytic converter (34) is arranged in the exhaust system (20) downstream of the four-way catalytic converter (30), and wherein a mixing section with a length of at least 30 cm is formed between the inlet point (38) and the four-way catalytic converter (30, 32).

2. Exhaust gas aftertreatment system according to Claim 1, **characterized in that** a first lambda probe (42) is arranged upstream of the three-way catalytic converter (28) near the engine and a second lambda probe (44) is arranged directly upstream of the four-way catalytic converter (30).

3. Exhaust gas aftertreatment system according to Claim 1, **characterized in that** a first lambda probe (42) is arranged upstream of the three-way catalytic converter (28) near the engine and a second lambda probe (44) is arranged downstream of the four-way catalytic converter (30).

4. Exhaust gas aftertreatment system according to Claim 1, **characterized in that** a first lambda probe (42) is arranged upstream of the three-way catalytic converter (28) near the engine, a second lambda probe (44) is arranged immediately upstream of the four-way catalytic converter (30), and a third lambda probe (46) is arranged downstream of the four-way catalytic converter (30).

5. Method for the exhaust gas aftertreatment of an internal combustion engine (10) with an exhaust gas aftertreatment system according to any one of Claims 1 to 4, comprising the following steps:
- heating the four-way catalytic converter (30) to a regeneration temperature (T_{R}) by introducing hot burner gases of the exhaust-gas burner (36), wherein a stoichiometric exhaust gas is regulated downstream of the four-way catalytic converter (30) or downstream of the second three-way catalytic converter (34),
- switching off the exhaust-gas burner (36) and injecting secondary air upstream of the four-way catalytic converter (30), wherein the soot retained in the four-way catalytic converter (30) is oxidized by a superstoichiometric exhaust gas (A > 1),
- operating the internal combustion engine (10) with a substoichiometric combustion air ratio (λ < 1), wherein the oxygen stored in the oxygen accumulator (OSC) of the four-way catalytic converter (30) during the phase of secondary air injection is at least substantially eliminated.

6. Method for exhaust gas aftertreatment according to Claim 5, **characterized in that** in the regeneration phase the mixed lambda λ_{vT} of exhaust-gas/air ratio and secondary air is 1.05 < λ_{vT} < 1.2.

7. Method for exhaust gas aftertreatment according to Claim 5 or 6, **characterized in that** a regeneration phase of the four-way catalytic converter (30, 32) is initiated after each active heating phase of the exhaust-gas burner (36).

## Revendications

1. Système de post-traitement des gaz d'échappement pour un moteur à combustion interne (10), comprenant une installation de gaz d'échappement (20), laquelle peut être raccordée à une sortie (12) du moteur à combustion interne (10), dans lequel l'installation de gaz d'échappement (20) comprend un canal de gaz d'échappement (22), dans lequel au moins un catalyseur à trois voies (28, 34) et un catalyseur à quatre voies (30, 32) sont disposés, dans lequel, directement en amont du catalyseur à quatre voies (30, 32), un point d'introduction (38) est situé, au niveau duquel les gaz d'échappement chauds d'un brûleur de gaz (36) du système de post-traitement des gaz d'échappement peuvent être introduits dans l'installation de gaz d'échappement (20) pour réchauffer le catalyseur à quatre voies (30, 32), dans lequel un premier catalyseur à trois voies (28) proche du moteur et, en aval du catalyseur à trois voies (28) proche du moteur, un catalyseur à quatre voies (30) sont situés, dans lequel le point d'introduction (38) est formé en aval du catalyseur à trois voies (28) proche du moteur et en amont du catalyseur à quatre voies (30), **caractérisé en ce que,** dans l'installation de gaz d'échappement (20), en aval du catalyseur à quatre voies (30), un autre catalyseur à trois voies (34) est disposé et dans lequel, entre le point d'introduction (38) et le catalyseur à quatre voies (30, 32), une section de mélange d'une longueur d'au moins 30 cm est formée.

2. Système de post-traitement des gaz d'échappement selon la revendication 1, **caractérisé en ce que,** en amont du catalyseur à trois voies (28) proche du moteur, une première sonde lambda (42) est disposée et, directement en amont du catalyseur quatre voies (30), une deuxième sonde lambda (44) est disposée.

3. Système de post-traitement des gaz d'échappement selon la revendication 1, **caractérisé en ce que,** en amont du catalyseur à trois voies (28) proche du moteur, une première sonde lambda (42) est disposée et, en aval du catalyseur quatre voies (30), une deuxième sonde lambda (44) est disposée.

4. Système de post-traitement des gaz d'échappement selon la revendication 1, **caractérisé en ce que,** en amont du catalyseur à trois voies (28) proche du moteur, une première sonde lambda (42) est disposée, directement en amont du catalyseur quatre voies (30), une deuxième sonde lambda (44) est disposée et, en aval du catalyseur quatre voies (30), une troisième sonde lambda (46) est disposée.

5. Procédé de post-traitement des gaz d'échappement d'un moteur à combustion interne (10) comprenant un système de post-traitement des gaz d'échappement selon l'une quelconque des revendications 1 à 4, comprenant les étapes suivantes :
- le chauffage du catalyseur à quatre voies (30) par introduction de gaz de brûleur chauds du brûleur de gaz (36) à une température de régénération (T_{R}), dans lequel, en aval du catalyseur quatre voies (30) ou en aval du deuxième catalyseur à trois voies (34), un gaz d'échappement stœchiométrique est réglé,
- la désactivation du brûleur de gaz (36) et le soufflage d'air secondaire en amont du catalyseur à quatre voies (30), dans lequel la suie retenue dans le catalyseur à quatre voies (30) est oxydée par un gaz d'échappement stœchiométrique (λ > 1),
- le fonctionnement du moteur à combustion interne (10) avec un rapport d'air de combustion sous-stœchiométrique (λ < 1), dans lequel l'oxygène accumulé dans un accumulateur d'oxygène (OSC) du catalyseur à quatre voies (30) durant la phase de soufflage d'air secondaire est au moins essentiellement éliminé.

6. Procédé de post-traitement des gaz d'échappement selon la revendication 5, **caractérisé en ce que** la valeur lambda de mélange λ_{vT} du rapport de gaz d'échappement et d'air et de l'air secondaire dans la phase de régénération est de 1,05 < λ_{vT} <1,2.

7. Procédé de post-traitement des gaz d'échappement selon la revendication 5 ou 6, **caractérisé en ce que,** après chaque phase de chauffage active du brûleur de gaz (36), une phase de régénération du catalyseur à quatre voies (30, 32) est introduite.
